# EUROPÄISCHE PATENTSCHRIFT

(11) **EP 1 210 506 B1**
(45) Veröffentlichungstag und Bekanntmachung des Hinweises auf die Patenterteilung: **17.05.2006**
(21) Anmeldenummer: 00958402.0
(22) Anmeldetag: 09.08.2000
(51) Int. Cl.: F01M 11/03, F01M 1/10

(54) **FLUIDKÜHLVORRICHTUNG**
FLUID COOLING DEVICE
UNITE DE REFROIDISSEMENT DE FLUIDE

(30) Priorität: 07.09.1999 DE 19942543
(43) Veröffentlichungstag der Anmeldung: 05.06.2002
(73) Patentinhaber: Hydac Fluidtechnik GmbH, 66273 Sulzbach/Saar (DE)
(72) Erfinder: LEHMANN, Frank, D-66386 St. Ingbert (DE)
(74) Vertreter: Bartels & Partner
(86) Internationale Anmeldenummer: PCT/EP2000/007729
(87) Internationale Veröffentlichungsnummer: WO 2001/018363

(56) Entgegenhaltungen:
- DE-A- 19 704 209
- DE-A- 19 731 558
- US-A- 3 741 342
- US-A- 5 538 626
- US-A- 5 887 562

## Beschreibung

Die Erfindung betrifft eine Fluidkühlvorrichtung mit in einer Baueinheit zusammengefaßter Kühl-, Filter- und Pumpeneinrichtung, wobei in einem Fluidkreislauf von der Pumpeneinrichtung gefördertes Fluid von der Filtereinrichtung filterbar und von der Kühleinrichtung kühlbar ist und wobei die Filterelrrichtung mindestens ein bei ihrer Verschmutzung auswechselbares Filterelement aufweist.

Bei bekannten Lösungen, wie sie frei auf dem Markt erhältlich sind, ist die angesprochene Umpump-Kühl-Filtereinheit eine kompakte und montagefreundliche Einheit für Filterkühlkreisläufe, vorzugsweise im Nebenstrom. Zum Anschließen der bekannten Fluidkühlvorrichtung ist mithin nur eine hydraulische Verrohrung von und zum Tank sowie die Spannungsversorgung zu installieren. Die im Nebenstrom anschließbare Fluidkühlvorrichtung weist als wesentliche Bestandteile eine geräuscharm arbeitende Förderpumpe auf, einen Fluidfilter sowie einen Öl-Wasser-Plattenwärmetauscher. Anwendungsbereiche der bekannten Einheiten sind Kunststoffspritzgußmaschinen, Pressen, Bearbeitungszentren, Windkraftanlagen und Getriebe.

Die angesprochene Filtereinrichtung bzw. der Filter der Fluidkühlvorrichtung ist in Abhängigkeit seines Verschmutzungsgrades von Zeit zu Zeit zu wechseln, d.h. gegen eine neue Einrichtung bzw. Filtereinheit auszutauschen. Bei den bekannten Lösungen muß hierzu entweder die gesamte Fluidkühlvorrichtung stillgelegt werden mit der Folge, daß die gesamte Fluidanlage, in der die Fluidkühlvorrichtung eingesetzt ist, abgeschaltet werden muß. Eine andere Möglichkeit besteht darin, einen Umschaltfilter vorzusehen, der eine filtrierte Schmierölversorgung auch für den Fall des Filterelementwechsels vorsieht. Der dahingehende Umschaltfilter nimmt jedoch relativ viel Bauraum ein und verteuert insgesamt die bekannten Lösungen.

Ausgehend von diesem Stand der Technik liegt der Erfindung die Aufgabe zugrunde, die bekannten Fluidkühlvorrichtungen dahingehend weiter zu verbessern, daß der angesprochene Filterelementwechsel ohne zusätzlichen Aufwand auch dann möglich ist, wenn die nachgeordnete Schmierölversorgung nicht abgestellt wird. Eine dahingehende Aufgabe löst eine Fluidkühlvorrichtung mit den Merkmalen des Anspruches 1.

Dadurch, daß für einen Austausch des jeweiligen Filterelementes im Fluidkreislauf eine ansteuerbare Absperreinheit vorhanden ist, mit der die Filtereinheit von der Fluidversorgung derart abtrennbar ist, daß die Kühleinrichtung weiter mit dem zu kühlenden Fluid versorgt ist, wird der Fluid- oder Ölstrom über einen Art Bypass an dem zu wechselnden Filter vorbeigeleitet und bei Erhitzung von der Kühleinrichtung für die weitere Verwendung bei einer Arbeitsmaschine od.dgl. gekühlt.

Die erfindungsgemäße Lösung ist kostengünstig realisierbar und erlaubt einen sicheren Filterelementwechsel, ohne daß die Bedienperson Sicherheitsrisiken unterliegt. Da der Filterelementwechsel in der Regel rasch erfolgt, sind die über die Bypass-Anordnung weitergegebenen Verschmutzungen an die Fluidkühlung hinnehmbar und beeinträchtigen die spätere Fluidversorgung für eine Arbeitsmaschine od.dgl. nicht.

Bei einer bevorzugten Ausführungsform der erfindungsgemäßen Fluidkühlvorrichtung besteht die ansteuerbare Absperreinheit aus einem Schaltventil, wobei für die Fluidversorgung der Kühleinrichtung innerhalb des Fluidkreislaufes diese im Nebenzweig eine Verbindungsleitung aufweist, die endseitig in die Versorgungsleitung für die Filter und die Kühleinrichtung mündet. Hierdurch ist eine besonders kompakt aufbauende Fluidkühlvorrichtung erreicht. Vorzugsweise ist dabei das Schaltventil von Hand betätigbar und mit einer Rasteinrichtung versehen, die die derart vorgebbare Schaltstellung beibehält, was die Funktionssicherheit der Vorrichtung gewährleistet.

Weitere vorteilhafte Ausführungsformen sind Gegenstand der Unteransprüche.

Im folgenden wird eine Ausführungsform der erfindungsgemäßen Fluidkühlvorrichtung anhand der Zeichnung näher erläutert. Es zeigen in prinzipieller und nicht maßstäblicher Darstellung die
- Fig.1: eine Schaltdarstellung der Fluidkühlvorrichtung;
- Fig.2a,2b und 2c: in Vorder-, Seiten- und Draufsicht die Fluidkühlvorrichtung nach der Fig.1.

Die Fluidkühlvorrichtung weist in einer Baueinheit 10 zusammengefaßt jeweils mindestens eine Kühleinrichtung 12, eine Filtereinrichtung 14 sowie eine Pumpeneinrichtung 16 auf. Das in einem Fluidkreislauf 18 von der Pumpeneinrichtung 16 geförderte Fluid, beispielsweise in Form von Hydrauliköl, ist von der Filtereinrichtung 14 filterbar und von der Kühleinrichtung 12 für die spätere Verwendung bei einer Arbeitsmaschine od.dgl. kühlbar. Die Hydropumpe der Pumpeneinrichtung 16 ist dabei mittels eines Elektromotors 20 antreibbar, wobei im Nebenschluß zu der eigentlichen Hydropumpe der Pumpeneinrichtung 16 ein in Richtung zum Sauganschluß hin öffnendes, federbelastetes Rückschlagventil 22 vorhanden ist.

Die Filtereinrichtung 14 weist mindestens ein bei ihrer Verschmutzung auswechselbares Filterelement 24 auf, wobei für einen Austausch des jeweiligen Filterelementes 24 im Fluidkreislauf 18 eine ansteuerbare Absperreinheit 26 vorhanden ist, mit der die Filtereinrichtung 14 von der Pumpeneinrichtung 16 derart abtrennbar ist, daß die Kühleinrichtung 12 weiter mit dem zu kühlenden Fluid über den Fluidkreislauf 18 versorgt ist.

Die ansteuerbare Absperreinheit 26 besteht vorzugsweise aus einem 2/2-Wege-Schaltventil 28, wobei für die Fluidversorgung der Kühleinrichtung 12 innerhalb des Fluidkreislaufes 18 dieser im Nebenzweig eine Verbindungsleitung 30 aufweist, die endseitig in die Versorgungsleitung 32 für die Filtereinrichtung 14 und die Kühleinrichtung 12 mündet. Das Schaltventil 28 ist über ein mit einer Rändelung 34 versehenes Stellteil 36 von Hand betätigbar und mit einer Rasteinrichtung 38 versehen, die die derart von Hand vorgebbare Schaltstellung beibehält.

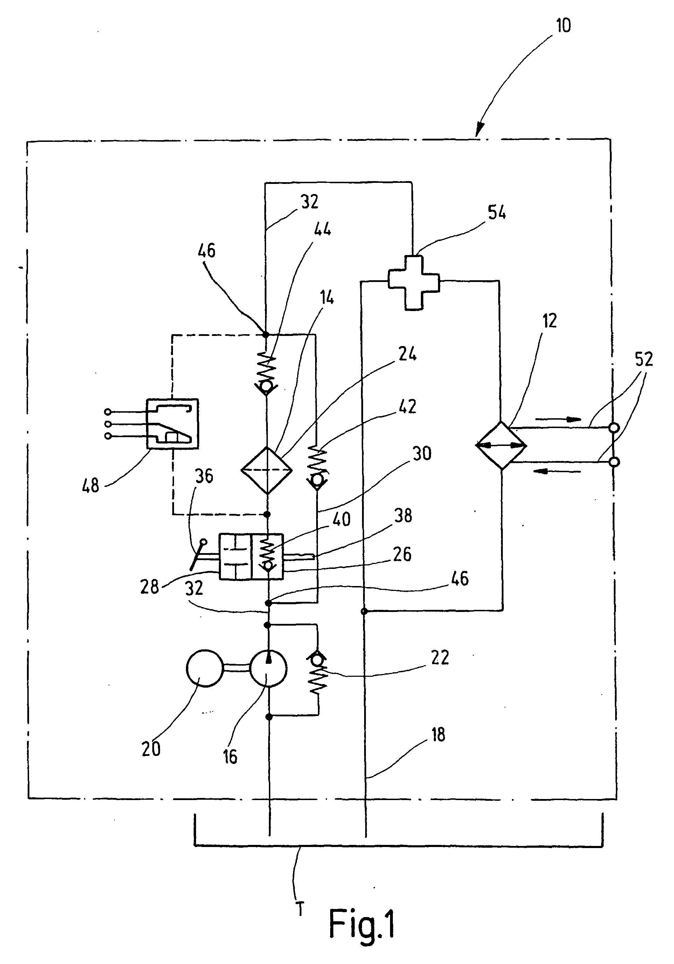

In die angesprochene Verbindungsleitung 30 ist, ebenso wie in die Versorgungsleitung 32, ein in Richtung der Kühleinrichtung 12 öffnendes erstes und zweites Rückschlagventil 42 bzw. 40 vorhanden. Dabei ist das eine erste Rückschlagventil 40 in der Versorgungsleitung 32 vor der Filtereinrichtung 14 Teil des Schaltventils 28, was sich insbesondere aus der Schaltdarstellung nach der Fig.1 ergibt. In der nicht betätigten Schaltstellung, wie in Fig.1 dargestellt, ist das erste Rückschlagventil 40 federbelastet in Richtung seiner Sperrstellung gehalten in die Versorgungsleitung 32 geschaltet, wohingegen in der anderen, nicht dargestellten Schaltstellung die dahingehende Versorgungsleitung 32 unterbrochen oder abgesperrt ist. In der Versorgungsleitung 32 wiederum in Richtung des strömenden Fluids vor und hinter der Filtereinrichtung 14 und zwischen den Anschlußstellen 46 der Verbindungsleitung 30 sind die angesprochenen Rückschlagventile 40, 42, 44 angeordnet. Alle Rückschlagventile 40, 42 und 44 sind federbelastet in Richtung ihrer in der Fig.1 dargestellten Schließstellung gehalten, wobei der Schließdruck des Rückschlagventils 42 in der Verbindungsleitung 30 des Nebenzweiges größer ist als der Schließdruck mindestens eines der Rückschlagventile 40, 44 in der Versorgungsleitung 32.

Um festzustellen, wie der Verschmutzungsgrad des Filterelementes 24 der Filtereinrichtung 14 ist, ist eine Differenzdruck-Feststelleinrichtung 48 vorhanden, die den Differenzdruck in Fluidrichtung vor und hinter dem Filterelement 24 feststellt und bei einem vorgebbaren Schwellenwert bei höheren Differenzdrücken und somit bei relevanter Verschmutzung dem Anlagenbetreiber mitteilt, daß ein Elementwechsel des Filterelementes 24 nunmehr ansteht und vorzunehmen ist. Der angesprochene Differenzdruck wird dabei in Fluidrichtung des Fluidkreislaufes 18 gesehen zwischen Absperreinheit 26 und Filterelement 24 sowie zwischen der Kühleinrichtung 12 und dem dritten Rückschlagventil 44 an der einen Anschlußstelle 46 vorgenommen. Als Differenzdruck-Feststelleinrichtung 48 findet vorzugsweise ein Druckschalter Verwendung, der bei einem vorgebbaren Schwellenwert schaltet und dann den notwendigen Filterelementwechsel anzeigt.

Die Kühleinrichtung 12 weist insbesondere einen Plattenwärmetauscher 50 auf, wobei als Kühlmedium ein Fluid, vorzugsweise Wasser, im Gegenstrom 52 das erhitzte Fluid kühlt. Die Anschlüsse für den dahingehenden Gegenstrombetrieb mit einem Kühlmedium sind in den Figuren entsprechend dargestellt. Für den Betrieb der Kühleinrichtung 12 ist eine Steuereinheit 54 vorgesehen, die nach Überschreiten eines einstellbaren Temperaturschwellenwertes die Kühleinrichtung 12 zuschaltet oder bei Unterschreiten des Temperaturschwellenwertes, beispielsweise 45°C, das nicht erwärmte Fluid unter Umgehung der Kühleinrichtung 12 an den Tank T über den Fluidkreislauf 18 zurückführt.

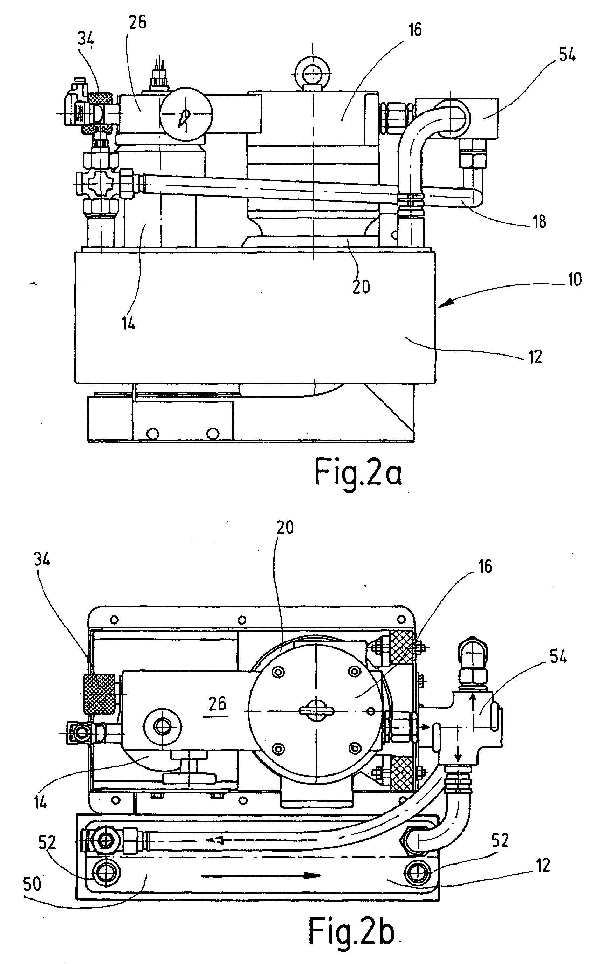

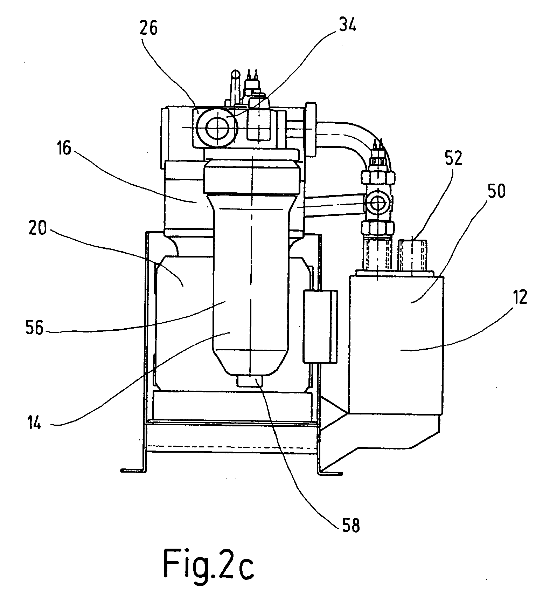

Zeigt die Differenzdruck-Feststelleinrichtung als Überwachungseinrichtung 48 eine Verschmutzung der Filtereinrichtung 14 mit ihrem Filterelement 24 an, wird das Schaltventil 28 der Absperreinheit 26 über das Stellteil 36 von Hand betätigt und in seine abgesperrte Stellung gebracht. Der Fluidstrom von der Pumpeneinrichtung 16 wird dann an dem Rückschlagventil 42 vorbei über die Verbindungsleitung 30 unmittelbar der Kühleinrichtung 12 für eine fortlaufende Kühlung zugeführt. Das Rückschlagventil 42 dient mithin als Filterbypassventil zur Umgehung der Filtereinheit. Der Betriebsdruck innerhalb des Fluidkreislaufes 18 verschließt dabei automatisch das Rückschlagventil 44 in der Versorgungsleitung 32. Das Filterelement 24 der Filtereinrichtung 14 ist mithin vollständig vom Fluidstrom des permanent weiterarbeitenden Kreises getrennt. Durch Entspannen des Inhaltes des Filtergehäuses 56 über die Ablaßschraube 58 (vgl. Fig.2b) kann das Filterelement 24, welches verschmutzt ist, gegen ein neues unbenutztes Filterelement gewechselt werden. Nach erfolgtem Elementwechsel und Verschließen der Ablaßbohrung über die Ablaßschraube 58 kann am Schaltventil 28 der Ölstrom zum Filterelement 24 wiederum freigegeben werden. Das Rückschlagventil 42 schließt dann automatisch durch Federkraft und lenkt den Ölstrom erneut durch das Filterelement 24 der Filtereinrichtung 14. Das dritte Rückschlagventil 44 öffnet ebenfalls automatisch und der angesprochene Fluidkreislauf 18 arbeitet wieder im gewünschten Filtrationsbetrieb. Die Schließkraft des Rückschlagventils 42 ist dabei stärker ausgelegt als die Schließkraft des Rückschlagventils 40, um sicherzustellen, daß im unbetätigten Zustand des Schaltventils 26 die Bypassfunktion nicht ungewollt in Kraft tritt.

## Patentansprüche

1. Fluidkühlvorrichtung mit in einer Baueinheit (10) zusammengefaßter Kühl-, Filter- und Pumpeneinrichtung, wobei in einem Fluidkreislauf (18) von der Pumpeneinrichtung (16) gefördertes Fluid von der Filtereinrichtung (14) filterbar und von der Kühleinrichtung (12) kühlbar ist und wobei die Filtereinrichtung (14) mindestens ein bei ihrer Verschmutzung auswechselbares Filterelement (24) aufweist, **dadurch gekennzeichnet, daß** für einen Austausch des jeweiligen Filterelementes (24) im Fluidkreislauf (18) eine ansteuerbare Absperreinheit (26) vorhanden ist, mit der die Filtereinrichtung (14) von der Pumpeneinrichtung (16) derart abtrennbar ist, daß die Kühleinrichtung (12) weiter mit dem zu kühlenden Fluid versorgt ist.

2. Fluidkühlvorrichtung nach Anspruch 1, **dadurch gekennzeichnet, daß** die ansteuerbare Absperreinheit (26) aus einem Schaltventil (28) besteht und daß für die Fluidversorgung der Kühleinrichtung (12) innerhalb des Fluidkreislaufes (18) dieser im Nebenzweig eine Verbindungsleitung (30) aufweist, die endseitig in die Versorgungsleitung (32) für die Filter- und die Kühleinrichtung (14,12) mündet.

3. Fluidkühlvorrichtung nach Anspruch 2, **dadurch gekennzeichnet, daß** das Schaltventil (28) von Hand betätigbar mit einer Rasteinrichtung (38) versehen ist, die die derart vorgebbare Schaltstellung beibehält.

4. Fluidkühlvorrichtung nach Anspruch 2 oder 3, **dadurch gekennzeichnet, daß** in die Verbindungsleitung (30) ebenso wie in die Versorgungsleitung (32) mindestens ein in Richtung der Kühleinrichtung (12) öffnendes Rückschlagventil (40,42,44) vorhanden ist.

5. Fluidkühlvorrichtung nach Anspruch 4, **dadurch gekennzeichnet, daß** in der Versorgungsleitung (32) in Richtung des strömenden Fluids vor und hinter der Filtereinrichtung (14) und zwischen den Anschlußstellen (46) der Verbindungsleitung (30) die Rückschlagventile (40,42,44) angeordnet sind.

6. Fluidkühlvorrichtung nach Anspruch 5, **dadurch gekennzeichnet, daß** das eine Rückschlagventil (40) in der Versorgungsleitung (32) vor der Filtereinrichtung (14) Teil des Schaltventils (28) ist.

7. Fluidkühlvorrichtung nach Anspruch 6, **dadurch gekennzeichnet, daß** alle Rückschlagventile (40,42,44) federbelastet in Richtung ihrer Schließstellung gehalten sind und daß der Schließdruck des Rückschlagventils (42) in der Verbindungsleitung (30) größer ist als der Schließdruck mindestens eines der Rückschlagventile (40,42,44) in der Versorgungsleitung (32).

8. Fluidkühlvorrichtung nach einem der Ansprüche 1 bis 7, **dadurch gekennzeichnet, daß** die Kühleinrichtung (12) einen Plattenwärmetauscher (50) aufweist, der als Kühlmedium ein Fluid, vorzugsweise Wasser, einsetzt.

9. Fluidkühlvorrichtung nach einem der Ansprüche 1 bis 8, **dadurch gekennzeichnet, daß** eine Steuereinheit (54) vorgesehen ist, die nach Überschreiten eines einstellbaren Temperaturschwellenwertes die Kühleinrichtung (12) zuschaltet.

10. Fluidkühlvorrichtung nach einem der Ansprüche 1 bis 9, **dadurch gekennzeichnet, daß** die Filtereinrichtung (14) mit einer Überwachungseinrichtung (48) zusammenwirkt, die den Grad ihrer Verschmutzung feststellt.

## Claims

1. Fluid cooling means with a cooling, filtering, and pumping means incorporated into an assembly (10), whereby fluid conveyed within a fluid cycle (18) by the pumping means (16) can be filtered by the filtering means (14) and cooled by the cooling means (12), and whereby the filtering means (14) comprises at least one filter element (24) to be replaced when the same is soiled, **characterised in that** a controllable shut-off (26) is provided within the fluid cycle (18) for the replacement of the relevant filter element (24), with which the filtering means (14) can be separated from the pumping means (16) in such a way that the cooling means (12) continues to be supplied with the fluid to be cooled.

2. Fluid cooling means according to Claim 1, **characterised in that** the controllable shut-off (26) consists of a switching valve (28), and **in that** the fluid cycle (18) comprises a connection pipe (30) within a secondary branch of the same for a fluid supply to the cooling means (12), the same opening into the supply pipe (32) for the filtering and the cooling means (14, 12) at its end.

3. Fluid cooling means according to Claim 2, **characterised in that** the switching valve (28) can be activated by hand and is equipped with an arresting means (38) which maintains the switch position that can be set in this way.

4. Fluid cooling means according to Claim 2 or 3, **characterised in that** the connection pipe (30) as well as the supply pipe (32) are equipped with at least one non-return valve (40, 42, 44) opening in the direction of the cooling means (12).

5. Fluid cooling means according to Claim 4, **characterised in that** the non-return valves (40, 42, 44) are disposed in the supply pipe (32) in the direction of the flowing fluid prior to and after the filtering means (14) and between the connection points (46) of the connection pipe (30).

6. Fluid cooling means according to Claim 5, **characterised in that** a non-return valve (40) in the supply pipe (32) prior to the filtering means (14) forms a part of the switching valve (28).

7. Fluid cooling means according to Claim 6, **characterised in that** all non-return valves (40, 42, 44) are spring loaded in the direction of their closing position, and **in that** the closing pressure of the non-return valve (42) in the connection pipe (30) is greater than the closing pressure of at least one of the non-return valves (40, 42, 44) in the supply pipe (32).

8. Fluid cooling means according to one of the Claims 1 to 7, **characterised in that** the cooling means (12) comprises a plate heat exchanger (50) which uses a fluid, preferably water, as cooling medium.

9. Fluid cooling means according to one of the Claims 1 to 8, **characterised in that** a control means (54) is envisaged, the same switching on the cooling means (12) when a settable temperature threshold value is exceeded.

10. Fluid cooling means according to one of the Claims 1 to 9, **characterised in that** the filtering means (14) co-operates with a monitoring means (48) which detects the degree of soiling of the former.

## Revendications

1. Installation de refroidissement de fluide comprenant un dispositif de refroidissement, un dispositif de filtration et un dispositif de pompage rassemblés en une unité (10) de construction, dans laquelle du fluide véhiculé dans un circuit (18) de fluide par le dispositif (16) de pompage peut être filtré par le dispositif (14) de filtration et peut être refroidi par le dispositif (12) de refroidissement, et dans laquelle le dispositif (14) de filtration a au moins un élément (24) filtrant pouvant être remplacé lorsqu'il est encrassé, **caractérisée en ce qu'**il y a, pour remplacer l'élément (24) filtrant, dans le circuit (18) de fluide une unité (26) d'arrêt, qui peut être commandée et par laquelle le dispositif (14) de filtration peut être séparé du dispositif (16) de pompage, de sorte que le dispositif (12) de refroidissement continue à être alimenté en le fluide à refroidir.

2. Installation de refroidissement de fluide suivant la revendication 1, **caractérisée en ce que** l'unité (26) d'arrêt, qui peut être commandée, est constituée d'une vanne. (28) de commande, et **en ce que** pour l'alimentation en fluide du dispositif (12) de refroidissement dans le circuit (18) de fluide, celui-ci a, dans la branche secondaire, un conduit (30) de liaison, qui débouche du côté de l'extrémité dans le conduit (32) d'alimentation du dispositif (14) de filtration et du dispositif (12) de refroidissement.

3. Installation de refroidissement de fluide suivant la revendication 2, **caractérisée en ce que** la vanne (28) de commande qui peut être actionnée à la main est munie d'un dispositif (38) d'encliquetage, qui conserve la position de commande qui peut être ainsi être prescrite.

4. Installation de refroidissement de fluide suivant la revendication 2 ou 3, **caractérisée en ce qu'**il y a dans le conduit (30) de liaison, tout comme dans le conduit (32) d'alimentation, au moins un clapet antiretour (40, 42, 44) qui s'ouvre en direction du dispositif de refroidissement.

5. Installation de refroidissement de fluide suivant la revendication 4, **caractérisée en ce que** les clapets antiretour (40, 42, 44) sont montés dans le conduit (32) d'alimentation en amont et en aval, dans le sens du fluide en circulation, du dispositif (14) de filtration et entre les points (46) de raccordement du conduit (30) de liaison.

6. Installation de refroidissement de fluide suivant la revendication 5, **caractérisée en ce qu'**un clapet antiretour (40) fait partie, dans le conduit (32) d'alimentation, en amont du dispositif (14) de filtration, de la vanne (28) de commande .

7. Installation de refroidissement de fluide suivant la revendication 6, **caractérisée en ce que** tous les clapets antiretour (40, 42, 44) sont maintenus en direction de leur position de fermeture sous l'action d'un ressort, et **en ce que** la pression de fermeture du clapet antiretour (42) dans le conduit (30) de liaison est plus grande que la pression de fermeture d'au moins l'un des clapets antiretour (40, 44) dans le conduit (32) d'alimentation.

8. Installation de refroidissement de fluide suivant l'une des revendications 1 à 7, **caractérisée en ce que** le dispositif (12) de refroidissement comporte un échangeur de chaleur (50) à plaques, qui utilise comme milieu de refroidissement un fluide, de préférence de l'eau.

9. Installation de refroidissement de fluide suivant l'une des revendications 1 à 8, **caractérisée en ce qu'**il est prévu une unité (54) de commande qui, après dépassement d'une valeur de seuil de température réglable, branche le dispositif (12) de refroidissement.

10. Installation de refroidissement de fluide suivant l'une des revendications 1 à 9, **caractérisée en ce que** le dispositif (14) de filtration coopère avec un dispositif (48) de contrôle, qui constate le degré de son encrassement.
